# EUROPÄISCHE PATENTANMELDUNG

(11) **EP 1 353 118 A2**
(43) Veröffentlichungstag der Anmeldung: **15.10.2003**
(21) Anmeldenummer: 03090069.0
(22) Anmeldetag: 17.03.2003
(51) Int. Cl.: F21S 10/02, F21V 29/00, H05B 33/08, H01L 33/00

(54) **Farbwechselstrahler**

(30) Priorität: 11.04.2002 DE 10216085
(71) Anmelder: FRANZ SILL GMBH, 10969 Berlin (DE)
(72) Erfinder: Rahn, Erhard, 14052 Berlin (DE)
(74) Vertreter: Lüke, Dierck-Wilm

(57) **Zusammenfassung**

Die Erfindung betrifft einen Farbwechselstrahler (1) mit einem Strahlergehäuse (2) aufweisend eine Lichtaustrittsöffnung (3), mit einem in dem Strahlergehäuse (2) angeordneten Leuchtmittel, und mit Mitteln zur Steuerung der Farbe des auf einer Zielfläche abgebildeten Lichtes. Sie ist dadurch gekennzeichnet, daß das Leuchtmittel durch ein LED-Raster (4) gebildet ist, wobei das LED-Raster (4) eine Mehrzahl von LEDs (5) aufweist, wobei die Mehrzahl von LEDs (5) in zumindest zwei LED-Gruppen (6, 6', 6'') aufgeteilt ist, wobei die LEDs (5) einer LED-Gruppe (6) Licht einer Wellenlänge emittieren, welche verschieden von der Wellenlänge des emittierten Lichtes einer anderen LED-Gruppe (6', 6'') ist, daß die Mittel zur Steuerung der Farbe eine Steuerelektronik (7) umfassen, welche verschiedene LED-Gruppen (6, 6', 6'') unabhängig voneinander mit jeweils einer variablen Betriebsspannung (U, U', U'') speist, und daß die Verhältnisse der Betriebsspannungen (U, U', U'') verschiedener LED-Gruppen (6, 6', 6'') zueinander nach Maßgabe einer auf der Zielfläche abzubildenden Farbe gesteuert und/oder geregelt werden.

## Beschreibung

### Gebiet der Erfindung.

Die Erfindung betrifft einen Farbwechselstrahler mit einem Strahlergehäuse aufweisend eine Lichtaustrittsöffnung, mit einem in dem Strahlergehäuse angeordneten Leuchtmittel, und mit Mitteln zur Steuerung der Farbe des auf einer Zielfläche abgebildeten Lichtes, ein Verfahren zum Bestrhalen einer Zielfläche mit wechselnden Farben sowie Verwendungen eines solchen Farbwechselstrahlers.

Der Begriff des Strahlers bezeichnet beliebige Lampen, Scheinwerfer oder Leuchten, deren emittiertes Licht eine Richtcharakteristik aufweist, i.e. welche einen Lichtpunkt beliebigen Durchmessers auf einer Zielfläche abbilden.

Eine Zielfläche kann ein Gegenstand sein, aber auch ein menschliches Auge.

### Hintergrund der Erfindung und Stand der Technik.

Beispielsweise im Bereich der Gebäudeaußenbeleuchtung bzw. Anstrahlung von Fassaden ist es aus künstlerischen oder architektonischen Gründen oft wünschenwert, wechselndes farbiges Licht einzusetzen. In der Leittechnik kann die Farbe sowie der Farbwechsel einer Leuchte bzw. eines Strahlers zur Vermittelung von Informationen an eine Person genutzt werden.

Aus der Praxis ist es zur Erzeugung farbigen Lichtes bekannt, Leuchtmittel mit jeweils einem Farbort oder im Bereich der Lichtaustrittsöffnung angeordnete eingefärbte Gläser oder Folien einzusetzen, welche als optisches Filter wirken.

Aus der Praxis sind zur Erzeugung wechselndes farbigen Lichtes Farbwechselstrahler bekannt, deren Leuchtmittel weißes Licht emittiert, wobei im Bereich der Lichtaustrittsöffnung mechanisch drehbare Farbräder mit verschiedenen Farbfiltern oder Farbfolien angeordnet sind. Hierbei sind die Farben sowie deren Anzahl vorgegeben durch die Bauart des Farbrades oder der Farbfolie und nicht ohne weiteres variabel. Insbesondere ist die Anzahl der Farben beschränkt. Hinzu kommt, daß die Mechaniken aufwendig, verschmutzungs- und störanfällig sind, insbesondere im Falle von Außenscheinwerfern. Mechanisch verstellbare Irisblenden oder dichroitische Farbfilter benötigen eine aufwendige Steuerungstechnik sind sind voluminös und kostenaufwändig. Farbige Übergänge und vorbestimmte Farborte sowie gesättigte Farben sind nicht immer erreichbar.

Aus der Praxis sind weiterhin LEDs (Light Emitting Diode) bekannt. Hierbei handelt es sich um Halbleiterbauelemente, welche bei Betrieb in Durchlaßrichtung praktisch monochromatisches Licht emittieren. Die Farbe des Lichtes hängt von der Elektronenzustanddichtefunktion bzw. Bandstruktur des verwendeten Halbleitermaterials ab. LEDs sind beispielsweise in den Lichtfarben rot (z.B. GaAS_{0,6}P_{0,4}, um 650 nm), grün (z.B. GaP:N, um 570 nm) und blau (z.B. GaGaN:Zn, um 440 nm) erhältlich. Höhere Lichtleistungen sind mit N oder Al bzw. P dotierten GaIn Halbleitern möglich. Dabei ist die Lichtstärke, bezogen auf die elektrische Leistung für verschieden farbige LEDs unterschiedlich. Hinzu kommt für menschliche Betrachter die Wellenlängenabhängigkeit des Hellempfindlichkeitsgrades, so daß verschiedenfarbige LEDs bei gleicher elektrischer Anschlußleistung meist stark unterschiedlich hell empfunden werden.

Schließlich sind aus der Praxis LED Leisten und Arrays bekannt, die mit LEDs der gleichen Farbe oder verschiedener Farben bestückt sind. In letzterem Falle werden LEDs mit unterschiedlichen Farben unabhängig voneinander und alternativ angesteuert. Man erhält also ein Display, welches alternativ in einer von mehreren zahlenmäßig stark begrenzten und invariablen Farben leuchtet.

### Technisches Problem der Erfindung.

Der Erfindung liegt das technische Problem zu Grunde, einen Farbwechselstrahler anzugeben, welcher einerseits vorbestimmte beliebige Farborte, gesättigte Farben sowie kontinuierliche farbige Übergänge bei Farbwechsel bietet und andererseits einfach, kostengünstig und nahezu wartungsfrei baut.

### Grundzüge der Erfindung und bevorzugte Ausführungsbeispiele.

Zur Lösung dieses technischen Problems lehrt die Erfindung, daß das Leuchtmittel durch ein LED-Raster gebildet ist, wobei das LED-Raster eine Mehrzahl von LEDs aufweist, wobei die Mehrzahl von LEDs in zumindest zwei LED-Gruppen aufgeteilt ist, wobei die LEDs einer LED-Gruppe Licht einer Wellenlänge emittieren, welche verschieden von der Wellenlänge des emittierten Lichtes einer anderen LED-Gruppe ist, daß die Mittel zur Steuerung der Farbe eine Steuerelektronik umfassen, welche verschiedene LED-Gruppen unabhängig voneinander mit jeweils einer variablen Betriebsspannung speist, und daß die Verhältnisse der Betriebsspannungen verschiedener LED-Gruppen zueinander nach Maßgabe einer auf der Zielfläche abzubildenden Farbe gesteuert und/oder geregelt werden.

Der Begriff der variablen Betriebsspannung bezieht sich auf einen (ggf. gleitenden) zeitlichen Mittelwert. Neben einer kontinuierlich im Spannungswert variablen Gleichspannung sind auch getaktete bzw. gepulste Gleichspannungen konstanten Spannungswertes umfaßt, wobei eine Variation des zeitlichen Mittelwertes der Spannung über das variable Taktverhältnis oder die variable Pulsdauer einstellbar ist.

Mit der Erfindung wird erreicht, daß auf der Zielfläche ein vorgegebenes Farbspektrum abgebildet werden kann, und daß zudem ein beliebiger kontinuierlicher oder diskontinuierlicher Farbwechsel innerhalb des Farbspektrums angesteuert werden kann. Hinzu kommt, daß Farbwechsel vergleichsweise extrem schnell möglich sind. Dies wird schließlich ohne jegliche Mechanik erreicht und ergibt einen Farbwechselstahler, welcher einfach baut und praktisch wartungsfrei ist. Wartungsintervalle werden ausschließlich von der mittleren Betriebsdauer der eingesetzten LEDs bestimmt. Mit der Erfindung lassen sich auch Farbwechselstrahler mit hoher Lichtstärke schaffen, da einerseits LEDs mit Lichtstärken von 10.000 mcd und mehr zur Verfügung stehen und andererseits eine hohe Anzahl von LEDs eingesetzt werden können.

Mit der Steuerung der Betriebsspannungen verschiedener LED-Gruppen lassen sich auch unschwer unterschiedliche Lichtstärken verschiedener LEDs sowie die Wellenlängenabhängigkeit des Hellempfindlichkeitsgrades berücksichtigen, wozu lediglich entsprechende Kennlinien bestimmt und in die Steuerung integriert werden brauchen.

In einer bevorzugten Ausführungsform der Erfindung sind drei LED-Gruppen eingerichtet, wobei die LEDs der verschiedenen LED-Gruppen zur Emission von rotem, grünem oder blauem Licht eingerichtet sind. Hiermit lassen sich praktisch alle Farben des sichtbaren Spektrums sowie weißes Licht abbilden und beliebige Farbwechsel mit beliebigen Übergängen durchführen.

Bevorzugt ist es, wenn die LEDs verschiedener LED-Gruppen gleichmäßig auf einer Rasterplatine verteilt angeordnet sind. Beispielsweise können jeweils eine rote, grüne und blaue LED unmittelbar zueinander benachbart, vorzugsweise an den Spitzen eines gleichseitigen Dreiecks, angeordnet sein. Aus solchen Farbtrippeln können größerflächige LED-Raster aufgebaut werden, wobei eine dichte Packung aller LEDs des LED-Rasters möglich ist.

Bevorzugterweise werden LEDs eingesetzt, welche in einem zylindrischen Körper mit einer Lichtaustrittlinse eingegossen sind. Dabei kann es sich empfehlen, wenn die Zylinderachsen der LEDs eines Farbtrippels nicht exakt parallel zueinander ausgerichtet sind, sondern in Richtung der der Lichtaustrittslinse und in Abstand hierzu einen gemeinsamen Schnittpunkt aufweisen. Hierdurch wird eine optimale Farbmischung erreicht.

In einer Ausführungsform der Erfindung von selbstständiger Bedeutung sind die LEDs in einer elektrisch isolierenden Wärmeleitmasse eingebettet, wobei zumindest die Lichtaustrittsöffnung bzw. -linse jeder LED aus der Wärmeleitmasse herausragt. Hiermit wird eine praktisch homogene Betriebstemperatur aller LEDs des LED-Rasters gewährleistet, was wiederum für eine gleichmäßige Lichtstärke aller LEDs einer LED-Gruppe sorgt. Insbesondere erlaubt dies, Untergruppen oder alle LEDs einer LED-Gruppe elektrisch in Serie zu schalten, wodurch das Layout der Platine eines LED-Rasters erheblich vereinfacht wird und wodurch aufgrund der durch die Serienschaltung hohe Betriebsspannung einer Untergruppe oder der LED-Gruppe eine einfachere und weniger präzise Stannungssteuerung bzw. -Regelung benötigt wird. Letztendlich werden Randeffekte durch unterschiedliche Betriebstemperaturen der randständig des LED-Rasters angeordneten LEDs und der inneren LEDs des LED-Rasters vermieden und wird für eine gleichmäßige und definierte Farbabbildung gesorgt.

Als Wärmeleitmassen kommen typischerweise zu thermoplastischen und/oder elastomeren Polymeren polymerisierende und/oder vernetzende Vergußmassen als Einkomponenten oder Zweikomponentenvergußmassen in Frage. Ein Beispiel hierfür ist modifiziertes Kohlenwasserstoffharz. Die Durchschlagsfestigkeit sollte höher als 1 kV/mm sein. Die Wärmeleitfähigkeit sollte bei 23 °C höher als 0,10 W/(mK), besser höher als 0,20 W/(mK), sein. Die Temperaturerhöhung bei der Polymerisation sollte weniger als 40 °C, besser weniger als 20°C, betragen. Die Dauertemperaturbeständigkeit sollte bis 85 °C, besser bis 120 °C, betragen. Die Glasübergangstemperatur sollte tiefer als -40 °C, besser tiefer als - 70 °C, sein.

Die Rasterplatine kann in einem innerhalb des Strahlergehäuses angeordneten LED-Gehäuse angeordnet und darin fixiert sein, welches LED-Gehäuse aus einem wäremleitfähigen Werkstoff, beispielsweise Metall, aufgebaut ist, wobei die Lichtaustrittsöffnungen frei von dem LED-Gehäuse sind. Beispielsweise kann das LED-Gehäuse im wesentlichen wannenförmig und von zylindrischer Form sein. Die Rasterplatine kann in die Wanne eingelegt und darin mit der Wärmeleitmasse eingegossen sein. Die Öffnung der Wanne kann mit einer Lochmaske verschlossen sein, wobei die Löcher der Lochmaske mit den Lichtaustrittsöffnungen der LEDs fluchten. Zumindest ein Teil der Außenwandung des LED-Gehäuses kann mit Kühlrippen ausgestattet sein. In dem Strahlergehäuse, welches seinerseits außenseitig mit Kühlrippen (geschlossenes Strahlergehäuse) oder mit Kühlöffnungen (offenes Strahlergehäuse) ausgestattet sein kann, kann ein Gebläse, beispielsweise ein Umluftgebläse im Falle eines geschlossenen Strahlergehäuses, eingerichtet sein.

In einer weiteren Ausführungsform der Erfindung kann die Rasterplatine oder das LED-Gehäuse gegenüber dem Strahlergehäuse manuell oder motorisch um ein oder um zwei orthogonal zueinander stehende Achsen verschwenkbar sein. In der Ausführungsform mit motorischer, insbesondere elektromotorischer Verschwenkbarkeit, kann der abgebildete Lichtpunkt auf einer Zielfläche mittels der Steuerelektronik bewegt werden, und zwar ohne Bewegung des Strahlergehäuses. Insbesondere im Falle geschlossener Strahlergehäuse hat dies den Vorteil, daß die Mechanik zum Verschwenken sowie der elektromotorische Antrieb vor Umwelteinflüssen geschützt und folglich praktisch wartungsfrei sind.

Die Erfindung lehrt weiterhin ein Verfahren zur Bestrahlung einer Zielfläche mit wechselnden Farben, wobei die Betriebsspannungen der LEDs unterschiedlicher LED-Gruppen eines erfindungsgemäßen Farbwechselstrahlers in zueinander definierten und veränderbaren Verhältnissen gesteuert werden nach Maßgabe einer vorgegebenen Farbwechselfolge.

Die Erfindung lehrt schließlich die Verwendung eines erfindungsgemäßen Farbwechselstrahlers zur Bestrahlung von Gebäudefassaden (Außenstrahler), zur Beleuchtung von Räumen (Deckenstrahler, Wandstrahler oder Bodenstrahler), wobei ein Farbwechsel zur Information von in den Räumen befindlichen Personen über besondere Zustände, insbesondere Gefahrenzustände, angesteuert wird, beispielsweise automatisch durch an die Steuerelektronik angeschlossene Sensoren, wie Temperatur- oder Rauchsensoren, in der Leittechnik (Bodenstrahler, Wandstrahler oder Deckenstrahler), wobei vorgegebene Wege durch Ansteuerung einer zugeordneten Farbe indiziert werden.

Im Folgenden wird die Erfindung anhand von lediglich Ausfürhungsbeispielen darstellenden Figuren näher erläutert. Es zeigen:
- Fig. 1:: einen erfindungsgemäßen Bodenstrahler im Querschnitt,
- Fig. 2:: einen erfindungsgemäßen Außenstrahler,
- Fig. 3:: den Gegenstand der Fig. 2 im Querschnitt,
- Fig. 4:: eine Ansicht des Gegenstandes der Fig. 2 in die Lichtaustrittsöffnung,
- Fig. 5:: eine Ansicht eines LED-Gehäuses mit Rasterplatine, in Aufsicht sowie im Querschnitt,
- Fig. 6:: ein schematisches Schaltbild einer Steuerelektronik, und
- Fig. 7:: eine beispielhafte Beschaltung verschiedener LED-Gruppen.

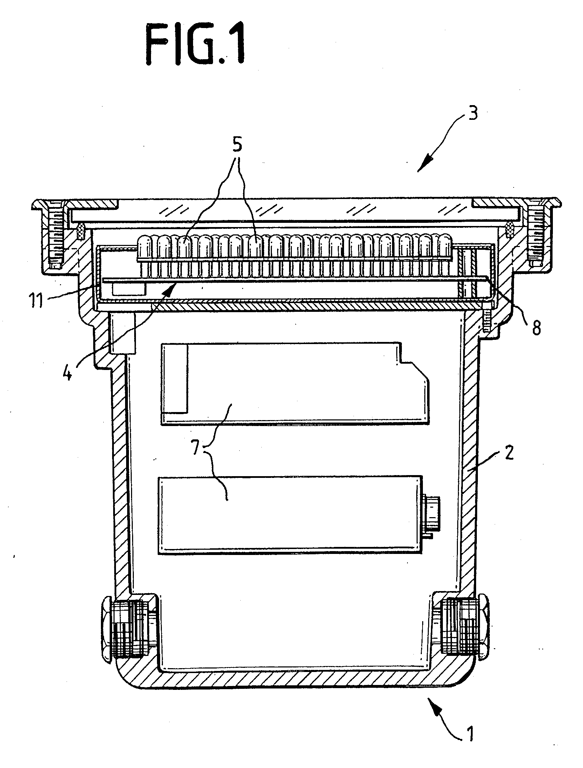

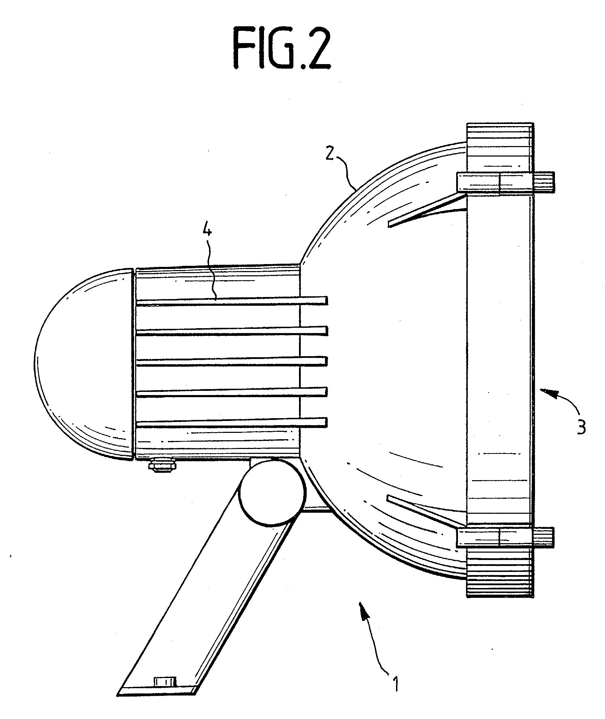

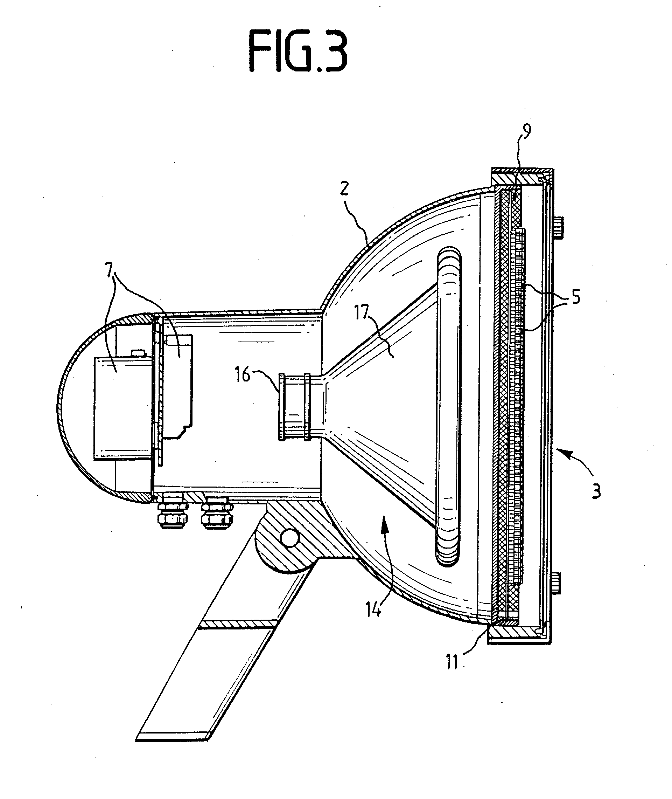

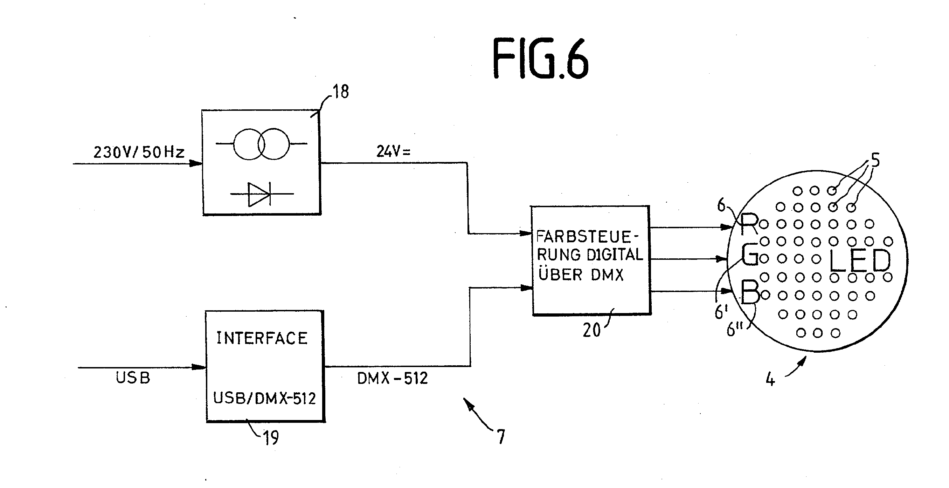

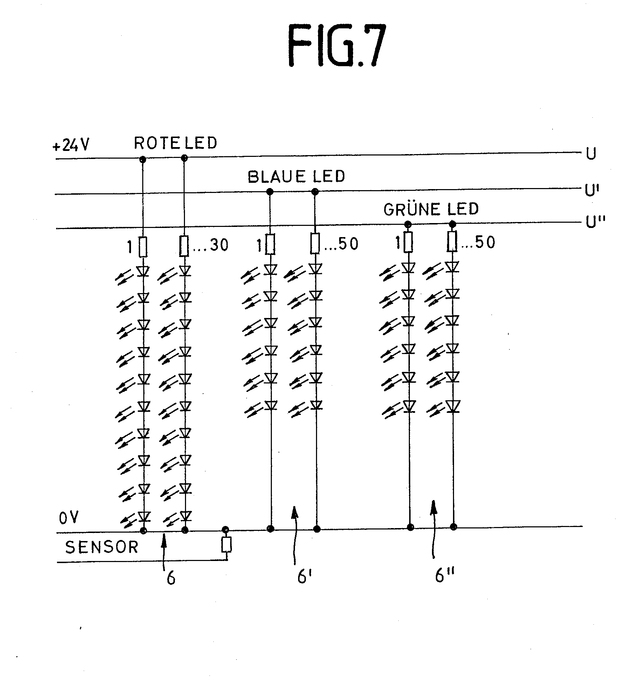

Den in den Figuren 1 bis 3 dargestellten Ausführungsformen ist gemeinsam, daß es sich um Farbwechselstrahler 1 handelt, welche ein Strahlergehäuse 2 mit einer Lichtaustrittsöffnung 3 aufweisen. Im Falle der Figur 1 handelt es sich um einen Bodenstrahler. Im Falle der Figuren 2 und 3 handelt es sich um einen Außenstrahler, wobei außenseitig des Strahlergehäuses 2 Kühlrippen 15 angebracht sind. In den Figuren 1 und 3 erkennt man, daß in dem Strahlergehäuse 2 ein LED-Raster 4 eingerichtet ist, wobei das LED-Raster 4 eine Mehrzahl von LEDs 5 aufweist. Die Mehrzahl von LEDs 5 ist in drei LED-Gruppen 6, 6', 6'' aufgeteilt, nämlich jeweils für die Farben rot, grün und blau. Hierzu wird ergänzend auf die Figuren 6 und 7 verwiesen. In dem Strahlergehäuse 2 ist weiterhin eine Steuerelektronik 7 eingerichtet, welche verschiedene LED-Gruppen 6, 6', 6'' unabhängig voneinander mit jeweils einer variablen Betriebsspannung U, U', U'' speist. Die Verhältnisse der Betriebsspannungen U, U', U'' verschiedener LED-Gruppen 6, 6', 6'' zueinander werden nach Maßgabe einer auf der Zielfläche abzubildenden Farbe gesteuert und/oder geregelt, wodurch eine definierte Farbwahl und ggf. Farbwechsel erfolgen. Ergänzend wird auf die Figuren 6 und 7 sowie die folgende Beschreibung hierzu verwiesen.

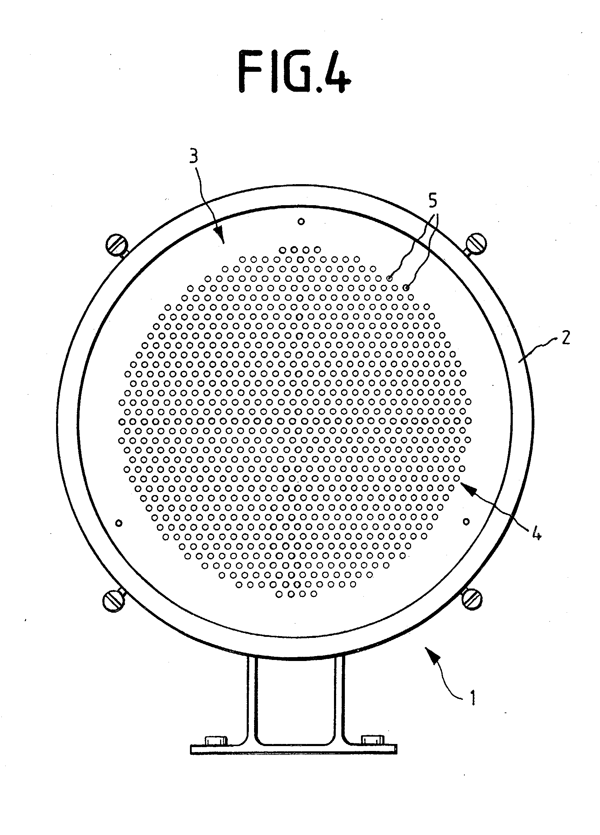

Aus einer vergleichenden Betrachtung der Figuren 1, 3, 4 und 5 entnimmt man, daß die LEDs 5 verschiedener LED-Gruppen 6, 6', 6'' gleichmäßig auf einer Rasterplatine 8 verteilt angeordnet sind, wobei jeweils eine rote, grüne und blaue LED 5 unmittelbar zueinander benachbart, und zwar an den Spitzen eines gleichseitigen Dreiecks, angeordnet sind.

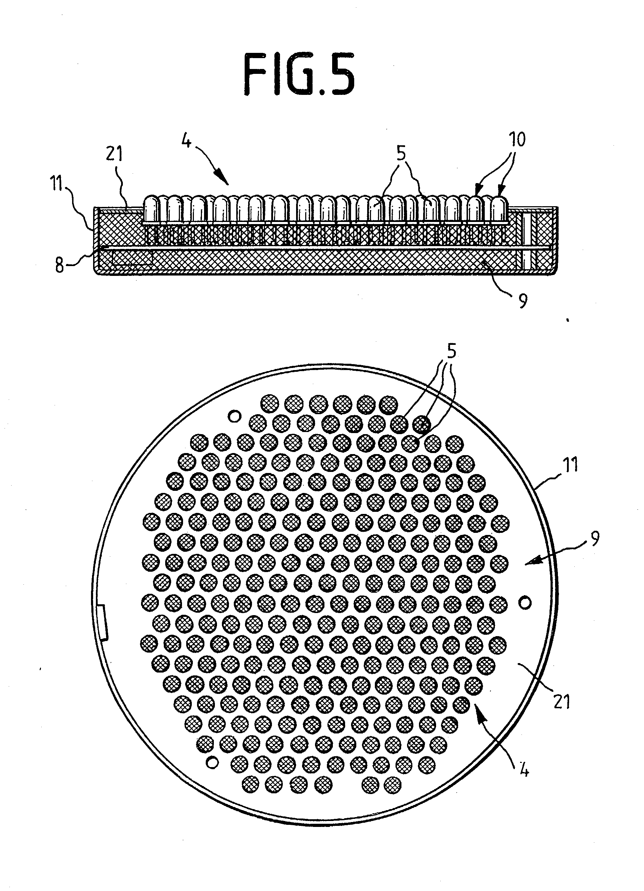

In der Querschnittsdarstellung der Figur 5 ist zu erkennen, daß die LEDs 5 in einer elektrisch isolierenden Wärmeleitmasse 9 eingebettet sind, und wobei zumindest die Lichtaustrittsöffnung 10 oder -linse 10 jeder LED aus der Wärmeleitmasse 9 herausragt. Die Rasterplatine 8 ist in einem innerhalb des Strahlergehäuses 2 angeordneten LED-Gehäuse 11 fixiert. Das LED-Gehäuse 11 ist aus einem wärmeleitfähigen Werkstoff, beispielsweise einer Aluminiumlegierung, aufgebaut. Die Lichtaustrittsöffnungen 10 sind frei von dem LED-Gehäuse 11. Zumindest ein Teil der Außenwandung des LED-Gehäuses 11 kann mit nicht dargestellten Kühlrippen oder einem mit dem LED-Gehäuse thermisch verbundenen Kühlkörper verbunden bzw. ausgestattet sein. Hierfür empfiehlt sich die Außenseite des Bodens des LED-Gehäuses 11. Die Wärmeleitmasse 9 ist durch ein Lochblech 21 abgedeckt.

Der Querschnittsdarstellung der Figur 3 ist entnehmbar, daß in dem Strahlergehäuse 2 ein Umluftgebläse 14 mit einer Ansaugöffnung 16 sowie einem Außlaßtrichter 17 angeordnet ist, welcher auf die Rückseite des LED-Gehäuses 11 gerichtet ist.

Die Steuerelektronik 7 in der Darstellung der Figur 6 umfaßt eine Stromversorgungseinheit 18, ein Interface 19 zum Anschluß eines nicht dargestellten Steuercomputers, sowie ein Farbsteuerinterface 20, an welches die verschiedenen LED-Gruppen 6, 6', 6'' angeschlossen sind und von welchem diese mit variablen Betriebspannungen angesteuert werden. In der Figur 7 erkennt man, daß Untergruppen der LEDs 5 einer LED-Gruppe 6, 6', 6'' gebildet sein können, in welchen jeweiligen Untergruppen eine Mehrzahl von LEDs in Serie geschaltet sind. Die Untergruppen einer LED-Gruppe 6, 6', 6'' sind wiederum parallel geschaltet. Eine Bestrahlung einer Zielfläche mit wechselnden Farben wird dadurch erreicht, daß die Betriebsspannungen der LEDs 5 unterschiedlicher LED-Gruppen 6, 6', 6'' in zueinander definierten und veränderbaren Verhältnissen gesteuert werden nach Maßgabe einer vorgegebenen Farbwechselfolge.

In der Lichtaustrittsöffnung 3 des Farbwechselstrahlers 1 kann eine Klarglasscheibe eingerichtet sein, es ist jedoch auch möglich, beliebige Streuscheiben, Linsen etc. vorzusehen. Interessante optische Tiefeneffekte werden durch Mehrfachreflektion erreicht, wenn eine nicht entspiegelte Klarglasscheibe eingesetzt wird.

Ein LED-Raster ist ein zweidimensionale Anordnung von LEDs, wobei die Gesamtzahl der LEDs zumindest 30, 50, 100 oder 200 betragen kann.

## Patentansprüche

1. Farbwechselstrahler (1) mit einem Strahlergehäuse (2) aufweisend eine Lichtaustrittsöffnung (3), mit einem in dem Strahlergehäuse (2) angeordneten Leuchtmittel, und mit Mitteln zur Steuerung der Farbe des auf einer Zielfläche abgebildeten Lichtes,
**dadurch gekennzeichnet,**
**daß** das Leuchtmittel durch ein LED-Raster (4) gebildet ist, wobei das LED-Raster (4) eine Mehrzahl von LEDs (5) aufweist, wobei die Mehrzahl von LEDs (5) in zumindest zwei LED-Gruppen (6, 6', 6'') aufgeteilt ist, wobei die LEDs (5) einer LED-Gruppe (6) Licht einer Wellenlänge emittieren, welche verschieden von der Wellenlänge des emittierten Lichtes einer anderen LED-Gruppe (6', 6'') ist,
**daß** die Mittel zur Steuerung der Farbe eine Steuerelektronik (7) umfassen, welche verschiedene LED-Gruppen (6, 6', 6'') unabhängig voneinander mit jeweils einer variablen Betriebsspannung (U, U', U'') speist,
und **daß** die Verhältnisse der Betriebsspannungen (U, U', U'') verschiedener LED-Gruppen (6, 6', 6'') zueinander nach Maßgabe einer auf der Zielfläche abzubildenden Farbe gesteuert und/oder geregelt werden.

2. Farbwechselstrahler (1) nach Anspruch 1, wobei drei LED-Gruppen (6, 6', 6'') eingerichtet sind und wobei die LEDs (5) der verschiedenen LED-Gruppen (6, 6', 6'') zur Emission von rotem, grünem oder blauem Licht eingerichtet sind.

3. Farbwechselstrahler (1) nach einem der Ansprüche 1 bis 2, wobei die LEDs (5) verschiedener LED-Gruppen (6, 6', 6'') gleichmäßig auf einer Rasterplatine (8) verteilt angeordnet sind.

4. Farbwechselstrahler (1) nach einem der Ansprüche 1 bis 3, wobei jeweils eine rote, grüne und blaue LED (5) unmittelbar zueinander benachbart, vorzugsweise an den Spitzen eines gleichseitigen Dreiecks, angeordnet sind.

5. Farbwechselstrahler (1) nach einem der Ansprüche 1 bis 4, wobei die LEDs (5) in einer elektrisch isolierenden Wärmeleitmasse (9) eingebettet sind, und wobei zumindest die Lichtaustrittsöffnung (10) oder -linse (10) jeder LED aus der Wärmeleitmasse (9) herausragt.

6. Farbwechselstrahler (1) nach einem der Ansprüche 1 bis 5, wobei die Rasterplatine (8) in einem innerhalb des Strahlergehäuses (2) angeordneten LED-Gehäuse (11) angeordnet und darin fixiert ist, welches LED-Gehäuse (11) vorzugsweise aus einem wärmeleitfähigen Werkstoff, insbesondere Metall, aufgebaut ist, und wobei die Lichtaustrittsöffnungen (10) frei von dem LED-Gehäuse (11) sind.

7. Farbwechselstrahler (1) nach Anspruch 6, wobei zumindest ein Teil der Außenwandung des LED-Gehäuses (11) mit Kühlrippen (12) ausgestattet ist.

8. Farbwechselstrahler (1) nach einem der Ansprüche 1 bis 7, wobei in dem Strahlergehäuse (2), welches seinerseits optional außenseitig mit Kühlrippen (13) und/oder mit Kühlöffnungen ausgestattet ist, ein Gebläse, insbesondere ein Umluftgebläse (14) im Falle eines geschlossenen Strahlergehäuses (2), eingerichtet ist.

9. Farbwechselstrahler (1) nach einem der Ansprüche 1 bis 8, wobei die Rasterplatine (8) oder das LED-Gehäuse (11) gegenüber dem Strahlergehäuse (2) manuell oder motorisch um eine Achse oder um zwei orthogonal zueinander stehende Achsen verschwenkbar ist.

10. Verfahren zur Bestrahlung einer Zielfläche mit wechselnden Farben, wobei die Betriebsspannungen der LEDs (5) unterschiedlicher LED-Gruppen (6, 6', 6'') eines Farbwechselstrahlers (1) nach einem der Ansprüche 1 bis 9 in zueinander definierten und veränderbaren Verhältnissen gesteuert werden nach Maßgabe einer vorgegebenen Farbwechselfolge.

11. Verwendung eines Farbwechselstrahlers (1) nach einem der Ansprüche 1 bis 9 zur Bestrahlung von Gebäudefassaden, oder zur Beleuchtung von Räumen, wobei ein Farbwechsel zur Information von in den Räumen befindlichen Personen über besondere Zustände, insbesondere Gefahrenzustände, angesteuert wird, oder in der Leittechnik, wobei vorgegebene Wege durch Ansteuerung einer zugeordneten Farbe indiziert werden.
